# EUROPÄISCHE PATENTSCHRIFT

(11) **EP 4 234 320 B1**
(45) Veröffentlichungstag und Bekanntmachung des Hinweises auf die Patenterteilung: **08.04.2026**
(21) Anmeldenummer: 23170269.7
(22) Anmeldetag: 13.09.2019
(51) Int. Cl.: B60R 7/04, B60N 2/00

(54) **MITTELKONSOLE ZWISCHEN ZWEI FAHRZEUGSITZEN UND KRAFTFAHRZEUG MIT SOLCH EINER MITTELKONSOLE**
CENTER CONSOLE BETWEEN TWO VEHICLE SEATS AND MOTOR VEHICLE HAVING A CENTER CONSOLE OF THIS TYPE
CONSOLE CENTRALE ENTRE DEUX SIÈGES DE VÉHICULE ET VÉHICULE AUTOMOBILE COMPRENANT UNE TELLE CONSOLE CENTRALE

(30) Priorität: 17.09.2018 DE 102018122669; 17.09.2018 DE 102018122688; 17.09.2018 DE 102018122653
(43) Veröffentlichungstag der Anmeldung: 30.08.2023
(62) Teilanmeldung aus: 19769776.6
(73) Patentinhaber: Motherson Innovations Company Limited, London E14 5HU (GB)
(72) Erfinder: Wieczorek, Romeo, 70327 Stuttgart (DE); Dobrete, Alexandru, 70327 Stuttgart (DE); Koller, Matthias, 70327 Stuttgart (DE); Jaeger, David-Kenneth, 70597 Stuttgart (DE); Mohrmann, Richard, 70327 Stuttgart (DE)
(74) Vertreter: Weber-Bruls, Dorothée

(56) Entgegenhaltungen:
- WO-A1-2014/055257
- US-A1- 2005 052 044
- US-A1- 2009 108 609

## Beschreibung

Die vorliegende Erfindung betrifft ein Kraftfahrzeug mit einer Mittelkonsole nach dem Oberbegriff von Anspruch 1.

Durch teil- oder vollautomatisiertes Fahren von Kraftfahrzeugen entsteht Potential für eine alternative Nutzung und darauf bezogen eine andere Ausgestaltung eines Fahrzeuginnenraums in Bezug zur Ausgestaltung von Fahrzeuginnenräumen konventioneller Kraftfahrzeuge ohne automatisierte Fahrfunktion. Im automatisierten Fahrbetrieb kann beispielsweise ein Fahrer seine Aufmerksamkeit den anderen Fahrzeuginsassen widmen, so dass ein Drehen eines Fahrersitzes zu den anderen Sitzen oder ein Drehen der Sitze einer vorderen Sitzreihe zu einer hinteren Sitzreihe den kommunikativen und sozialen Austausch der Fahrzeuginsassen fördern kann.

Hinderlich für eine Drehbewegung von Fahrzeugsitzen ist eine neben den Sitzen befindliche Mittelkonsole. In einem herkömmlich großen Kraftfahrzeug mit Mittelkonsole bedarf es einer komplizierten Mechanik, um die Sitze und die Mittelkonsole aneinander vorbei bewegen zu können.

Die WO 2014/055257 A1 beschreibt ein Kraftfahrzeug mit einer Aufbewahrungskonsole gemäß dem Oberbegriff des Anspruchs 1, wobei die Aufbewahrungskonsole ein Gehäuse umfasst, das von einer verstauten Position in eine aufrechte Position bewegbar ist und wobei das Gehäuse eine obere Oberfläche aufweist, die in der verstauten Position im Wesentlichen bündig mit dem Boden des Fahrzeugs abschließt und in der aufrechten Position vom Boden beabstandet ist.

Aus der DE 10 2014 224 560 A1 ist eine Anordnung für einen Fahrzeuginnenraum bekannt, mit einer ersten Sitzreihe, die wenigstens einen Sitz aufweist und mit einer in dem Fahrzeuginnenraum vor oder hinter der ersten Sitzreihe angeordneten zweiten Sitzreihe, die mindestens einen Sitz aufweist, wobei die erste Sitzreihe in oder auf einer in oder auf einem Boden des Fahrzeuginnenraums drehbar gelagerten Platte angeordnet ist. Weiter ist bei dieser Anordnung vorgesehen, dass wenigstens eine verschiebbar gelagerte Konsole vorgesehen ist, die entlang zumindest einer in oder auf dem Boden des Fahrzeugs angeordneten Schiene verschiebbar ist, welche wiederum mehrteilig ausgebildet ist und zumindest bereichsweise in oder auf der Platte angeordnet ist. Zum Verschieben der Konsole, insbesondere zum elektromotorischen Verschieben, ist der Konsole bevorzugt auch eine Antriebsvorrichtung zugeordnet, die eine in oder an der Schiene geführte Schubkette aufweist, die mit der Konsole verbunden ist. Durch die Schubkette, die durch die Antriebsvorrichtung betätigbar ist, lässt sich die Konsole entlang der Schiene an eine beliebige Stelle verschieben. In einer beschriebenen Ausführungsform werden bei einem Verdrehen der Platte zwei Sitze, die eine Sitzreihe auf der Platte bilden, gegeneinander verfahren und aufeinander zubewegt, damit die Sitze nicht mit Seitenwänden des Fahrzeuginnenraums in Konflikt geraten und um ein Verdrehen der Sitze auf kleinstmöglichen Raum zu gewährleisten. Damit dabei keine Konsole im Bewegungsweg der Sitze liegt, wird diese durch die Antriebsvorrichtung automatisch in eine abseits der Platte befindliche Freigabeposition, beispielsweise bei einem Armaturenbrett, verfahren.

Die DE 20 2004 013 633 U1 beschreibt eine Mittelkonsole eines Kraftfahrzeuges mit zumindest einem mit einem Deckelelement verschließbaren containerförmigen Ablagefach, welches mittels wenigstens zweier beabstandeter und parallel zueinander an der Mittelkonsole befestigten sowie in Längsrichtung des Kraftfahrzeuges weisenden Linearführungselementen längsverschiebbar geführt ist. Dabei sind die Linearführungselemente in Fahrtrichtung des Kraftfahrzeuges gesehen kontinuierlich ansteigend oder bogenförmig profiliert ausgebildet, wodurch bei einem Verschieben des Ablagefaches samt Deckelelement eine Bewegung desselben sowohl in Fahrzeuglängsrichtung als auch in Fahrzeughochrichtung erfolgt. Das Deckelelement kann als Armauflage ausgebildet sein und das Ablagefach samt Deckelelement kann manuell oder elektromotorisch längsverschiebbar sein.

In der US 7,543,871 B2 wird eine Mittelkonsole für ein Armaturenbrett gezeigt, die ein Gehäuse mit einem Anzeigebereich und einem dem Gehäuse zugeordneten Betätigungsmechanismus umfasst, wobei der Betätigungsmechanismus die Bewegung des Gehäuses relativ zum Armaturenbrett erlaubt. Die Mittelkonsole nimmt eine relativ zum Fahrzeugboden aufrechte Stellung ein und der Anzeigebereich weist eine Kontrollvorrichtung auf.

In der DE 103 34 999 A1 wird zudem eine verstellbare Mittelkonsole beschrieben, die in einem Fahrzeug zwischen zwei Vordersitzen und im Anschluss an ein Armaturenbrett angeordnet ist. Zumindest ein Abschnitt der Mittelkonsole oder die gesamte Mittelkonsole ist von einer vorderen Endposition zwischen den Vordersitzen in Fahrzeuglängsrichtung nach hinten in eine beliebige Zwischenposition oder eine hintere Endposition vor oder zwischen Rücksitzen und zurück verstellbar. Das Verstellen der Mittelkonsole kann manuell oder über einen Antrieb, insbesondere einen Elektromotor, der mit einem selbsthemmenden Getriebe versehen ist, erfolgen. Dazu sind in der verstellbaren Mittelkonsole Führungsmittel ausgebildet, die in eine im Fahrzeugboden vorgesehene Führung eingreifen.

Die DE 101 37 036 A1 zeigt im Innenraum eines Fahrzeugs eine Armaturentafel sowie einen in Fahrzeuglängsrichtung verschiebbaren Container, wobei die Armaturentafel eine Aussparung zum Einschieben des Containers derart aufweist, dass der Container in seiner eingeschobenen Stellung bündig mit der Armaturentafel abschließt. Der Container ist auf mindestens einer Schiene verfahrbar, die in den Boden des Fahrzeugs eingelassen ist und sich zumindest im Bereich zwischen den Vordersitzen des Fahrzeugs und deren Fußräumen erstreckt, aber auch bis in den Kofferraum des Fahrzeugs geführt sein kann. Zudem kann die Schiene mit einer Stromzuführung für den Container versehen und der Container mit elektrischen Anschlüssen bestückt sein.

In einem Informationsblatt zur Konzept-Studie Pikes Peak quattro von Audi, die auf der North American International Motor Show 2003 präsentiert wurde, wird eine zwischen den Einzelsitzen einer zweiten Sitzreihe absenkbare und versenkbare hintere Mittelkonsole ohne weitere Details erwähnt.

Die aus dem Stand der Technik bekannten Anordnungen und das daraus jeweils ableitbare Verfahren, eine starre Mittelkonsole aus dem Bereich zwischen zwei Fahrzeugsitzen an eine andere Position im Fahrzeuginnenraum zu verfahren, kann nur bei Kraftfahrzeugen mit einem ausreichend großen, selbst besonders großen Fahrzeuginnenraum angewendet werden. Ein Absenken oder Versenken von starr konzipierten Mittelkonsolen in den Fahrzeugboden hinein wäre aufgrund eines im Verhältnis zu deren Höhe schmalen herkömmlichen Fahrzeugbodens nicht möglich, insbesondere bei Elektrokraftfahrzeugen, deren Fahrzeugboden bevorzugt für Batterien vorgesehen ist.

Die Aufgabe der Erfindung ist es, das gattungsgemäße Kraftfahrzeugderart weiterzuentwickeln, dass ein Drehen mindestens eines Fahrzeugsitzes bei kleinen Fahrzeuginnenräumen und in einer für Fahrzeuginsassen eleganten Ausführung ermöglicht.

Diese Aufgabe wird erfindungsgemäß gelöst durch die kennzeichnenden Merkmale von Anspruch 1. Bevorzugte erfindungsgemäße Kraftfahrzeuge sind in den Ansprüchen 2 bis 5 beschrieben.

Ausführungsbeispiele einer Mittelkonsole in einem erfindungsgemäßen Kraftfahrzeug betreffen die Mittelkonsole zwischen zwei Sitzen in dem Kraftfahrzeug, die über einen Faltmechanismus von einer ersten, aufrechten Position, die einen ersten Verwendungszustand bestimmt, in eine zweite, zusammengefaltete Position, die einen zweiten Verwendungszustand bestimmt, bewegbar ist, wobei die Mittelkonsole in der zweiten Position relativ zu einer Bodenoberfläche zwischen den Sitzen abgesenkt ist, wobei die Mittelkonsole in der zweiten Position im Wesentlichen parallel zu der Bodenoberfläche und in einer flachen Stellung innerhalb einer Aussparung im Fahrzeugboden angeordnet ist.

Bevorzugt ist dabei, dass die Mittelkonsole in der Aussparung im Fahrzeugboden von mindestens einer, vorzugsweise verfahrbaren, Abdeckplatte abdeckbar ist.

Erfindungsgemäße Kraftfahrzeuge weisen fünf Elemente der Mittelkonsole auf, umfassend ein Mittelelement, das in der ersten, aufrechten Position im Wesentlichen parallel zu der Bodenoberfläche verläuft, zwei Endelemente, die in der ersten, aufrechten Position im Wesentlichen parallel zu der Bodenoberfläche verlaufen und/oder in die Bodenoberfläche zumindest teilweise abgesenkt sind, und zwei Seitenelemente zwischen den Endelementen und dem Mittelelement.

Ferner wird vorgeschlagen, dass die Mittelkonsole einen symmetrischen Aufbau relativ zu ihrer Längsachs senkrecht zu der Bodenoberfläche und senkrecht zur Fahrzeuglängsachse hat.

Ausführungsformen der Erfindung können gekennzeichnet sein durch mindestens ein Anschlagselement zur Definition der ersten, aufrechten Position und/oder einer maximale Aufstellhöhe der Mittelkonsole, wobei vorzugsweise eines der fünf Elemente das Anschlagselement umfasst oder mit demselben, insbesondere beweglich, verbunden ist.

Des Weiteren wird erfindungsgemäß vorgeschlagen, dass die Elemente relativ zueinander bewegbar verbunden sind, insbesondere durch auf gegenüberliegenden Seiten angeordnete Drehachsen und/oder Scharniere, wobei vorzugsweise die Elemente starr sind.

In anderen Ausführungsformen kann vorgesehen sein, dass die Endelemente der starren Elemente zum Wechsel von der ersten Position in die zweite Position auseinanderziehbar und zum Wechsel von der zweiten Position in die erste Position zusammendrückbar sind.

Mittelkonsolen können auch zumindest einen Aktuator zum translativen Verschieben mindestens eines der Endelement der Mittelkonsole zwecks Wechsel zwischen der ersten und zweiten Position der Mittelkonsole aufweisen, wobei vorzugsweise der Aktuator einen Linearmotor und/oder eine durch einen Elektromotor angetriebene Gewindespindel oder Schubkette umfasst.

Erfindungsgemäßist, dass die Elemente einen Faltmechanismus mit Lammelenstruktur aufweisen, wobei vorzugsweise die Seitenelemente die Lammelenstruktur aufweisen.

Ferner ist erfindungsgemäß mindestens ein Hubzylinder zum Absenken und Aufrichten zwecks Wechsel zwischen der ersten und zweiten Position der Mittelkonsole vorgesehen, wobei vorzugsweise der Hubzylinder einen elektromechanischen Hubzylinder, einen Pneumatikzylinder oder einen Hydraulikzylinder umfasst, und/oder vorzugsweise der Hubzylinder an das Mittelelement angreift oder mit demselben verbunden ist.

Bevorzugt ist erfindungsgemäße ein selbsthemmendes System vorgesehen, insbesondere umfassend ein untersetztes Getriebe, so dass eine auf die Mittelkonsole ausgeübte externe Kraft kein Absenken oder Aufrichten der Mittelkonsole bewirkt.

Ferner kann eine Mittelkonsole einen elastischen Oberflächenbezug aufweisen, insbesondere auf zumindest einen Teil der Elemente gespannt, und/oder mindestens einen Touchscreen, insbesondere auf dem Mittelelement, und/oder mindestens eine Ablagefixierung, die beim Bewegen der Mittelkonsole darauf abgelegte Gegenstände, insbesondere innerhalb der Mittelkonsole, fixiert. Eine Ablagefixierung kann beispielsweise eine elastische Oberfläche der Mittelkonsole darstellen, die im Flachzustand dafür sorgt, dass nichts herausfällt.

Die Erfindung ermöglicht ein Verfahren zum Drehen mindestens eines Sitzes in dem Kraftfahrzeug mit einer neben dem Sitz angeordneten Mittelkonsole, wobei vor oder während des Drehens des Sitzes die Mittelkonsole zumindest so weit abgesenkt wird, dass die Mittelkonsole das Drehen des Sitzes nicht behindert und Sitz und Mittelkonsole aneinander vorbei bewegt werden können.

Also ist gewährleistet, dass kein Fahrzeuginnenraumbereich freigehalten oder beansprucht werden muss, um nicht ein Drehen eines neben der Mittelkonsole befindlichen Fahrzeugsitzes zu behindern.

Die Erfindung und deren bevorzugte Ausführungsformen werden nachfolgend beispielhaft anhand schematischer Zeichnungen näher erläutert:
- Figur 1a: zeigt einen Fahrzeuginnenraum mit einer ersten Ausführungsform einer Mittelkonsole in einem ersten Verwendungszustand neben einem Sitz;
- Figur 1b: zeigt wie in Figur 1a den Fahrzeuginnenraum mit der Mittelkonsole in einem zweiten Verwendungszustand vor einem Armaturenbrett;
- Figur 2a: zeigt einen Fahrzeuginnenraum mit einer zweiten Ausführungsform einer Mittelkonsole in einem ersten Verwendungszustand neben einem Sitz;
- Figur 2b: zeigt wie in Figur 2a den Fahrzeuginnenraum mit der Mittelkonsole in einem zweiten Verwendungszustand vor einem Armaturenbrett;
- Figur 3a: zeigt einen Fahrzeuginnenraum mit einer dritten Ausführungsform einer Mittelkonsole in einer aufgerichteten Stellung an einer ersten Position neben einem Sitz;
- Figur 3b: zeigt wie in Figur 3a den Fahrzeuginnenraum mit der Mittelkonsole in einer abgesenkten Stellung an der ersten Position neben dem Sitz;
- Figur 3c: zeigt wie in Figur 3a und 3b den Fahrzeuginnenraum mit der Mittelkonsole in der abgesenkten Stellung an einer zweiten Position in einer Garage;
- Figur 4a: zeigt einen Fahrzeuginnenraum mit einer vierten Ausführungsform einer Mittelkonsole in einer aufgerichteten Stellung an einer ersten Position neben einem Sitz;
- Figur 4b: zeigt wie in Figur 4a den Fahrzeuginnenraum mit der Mittelkonsole in einer abgesenkten Stellung an einer zweiten Position in einer Garage;
- Figur 5: zeigt eine Kniehebelvorrichtung;
- Figur 6: zeigt eine perspektivische Ansicht der vieren Ausführungsform der Mittelkonsole wie in den Figuren 4a und 4b mit einer Schiene;
- Figur 7a: zeigt eine Schnittansicht der Mittelkonsole mit Schiene wie in Figur 6 mit der Kniehebelvorrichtung wie in Figur 5 in einer aufgerichteten Stellung;
- Figur 7b: zeigt eine Schnittansicht der Mittelkonsole mit Schiene wie in Figur 6 mit der Kniehebelvorrichtung wie in Figur 5 in einer abgesenkten Stellung;
- Figur 8a: zeigt eine perspektivische Ansicht einer fünften Ausführungsform einer Mittelkonsole mit einer Schiene;
- Figur 8b: zeigt eine perspektivische Ansicht einer sechsten Ausführungsform einer Mittelkonsole mit einer Schiene;
- Figur 9: zeigt einen Fahrzeuginnenraum eines erfindungsgemäßen Kraftfahrzeugs mit einer Mittelkonsole in einer aufgerichteten Stellung zwischen zwei Sitzen;
- Figur 10: zeigt in Schnittansichten den Ablauf einer Stellungsänderung einer siebten Ausführungsform einer Mittelkonsole, zu drei Zeitpunkten; und
- Figur 11: zeigt in Schnittansichten wie in Figur 10 den Ablauf einer Stellungsänderung einer Mittelkonsole des erfindungsgemäßen Kraftfahrzeugs, zu drei Zeitpunkten.

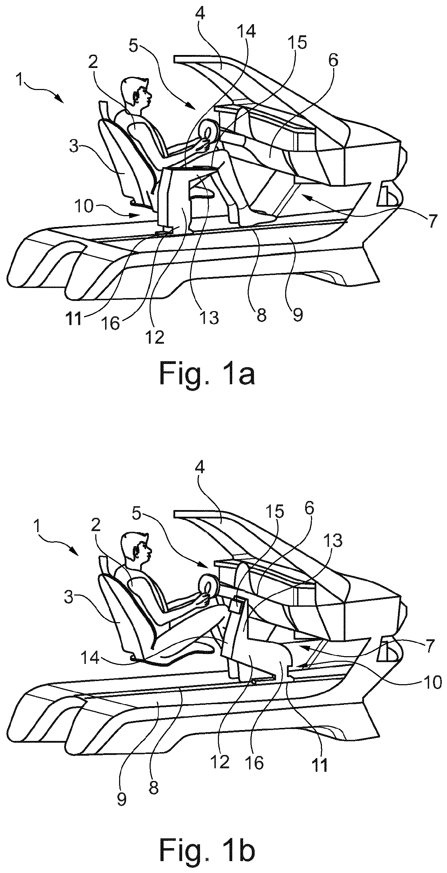

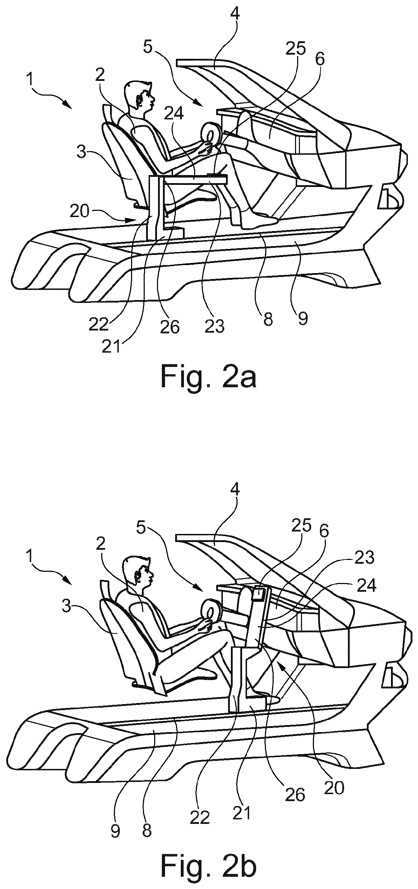

In den Figuren 1a und 1b sowie 2a und 2b ist aus einer perspektivischen Sicht ein Fahrzeuginnenraum 1 mit einem Fahrzeuginsassen 2 auf einem Sitz 3, insbesondere einem Fahrer auf einem Fahrersitz, sowie eine Windschutzscheibe 4 und ein Fahrzeugcockpit 5 mit Lenkrad und Armaturenbrett 6 zu sehen. Unterhalb des Armaturenbretts 6 befindet sich ein Freiraum 7. Ferner ist eine Schiene 8 im Fahrzeugboden 9 zu sehen, entlang dieser eine Mittelkonsole 10, 20 verfahren werden kann.

Die Figur 1a zeigt eine erste Ausführungsform einer verfahrbaren und klappbaren Mittelkonsole 10 in einem ersten Verwendungszustand, wobei die Mittelkonsole 10 eine aufrechte Stellung an einer ersten Position neben dem Fahrzeuginsassen 2 und dem Sitz 3 einnimmt. Die Mittelkonsole 10 weist eine Basis 11, eine Säule 12 und einen am oberen Ende der Säule 12 ausgehenden Vorsprung 13 auf. Der Vorsprung 13 bildet mit der Säule 12 eine feste Einheit und stellt eine Ablagefläche 14 in horizontaler Lage mit einem Touchscreen 15 bereit. Die Säule 12 ist mit der Basis 11 über ein Drehgelenk 16 verbunden, dessen Drehachse quer zur Längsachse der Säule 12 und quer zum Verlauf der Schiene 8 orientiert ist. Die Basis 11 ist mit einem nicht dargestellten aktiven Motorantrieb, beispielsweise einem sich im Fahrzeugboden 9 befindlichen Riemenantrieb, verbunden, über den die Mittelkonsole 10 von der Schiene 8 geführt verfahren werden kann.

In Figur 1b ist die Mittelkonsole 10 in einem zweiten Verwendungszustand vor dem Armaturenbrett 6 gezeigt. Die Mittelkonsole 10 nimmt eine umgeklappte Stellung ein, indem sich die Basis 11 an einer zweiten Position sowie ein Teil der Säule 12 in zum Fahrzeugboden 9 geneigter Haltung im Freiraum 7 unterhalb des Armaturenbretts 6 befinden. Durch die geneigte Haltung der Säule 12 ist der Vorsprung 13 in einer aufgerichteten Stellung, womit die Ablagefläche 14 sowie der Touchscreen 15 eine fast vertikalen Lage vor dem Armaturenbrett 6 einnehmen, in der der Touchscreen 15 vom Fahrzeuginsassen 2 bedient werden kann. Beim zweiten Verwendungszustand der Mittelkonsole 10 ergibt sich neben dem Sitz 3 ein Freiraum, der ein Drehen des Sitzes 3 ermöglicht.

Die Figur 2a zeigt eine zweite Ausführungsform einer verfahrbaren und klappbaren Mittelkonsole 20 in einem ersten Verwendungszustand, wobei die Mittelkonsole 20 eine aufrechte Stellung an einer ersten Position neben dem Fahrzeuginsassen 2 und dem Sitz 3 einnimmt. Die Mittelkonsole 20 weist eine Basis 21, eine Säule 22 und ein am oberen Ende der Säule 22 abstehenden Vorsprung 23 auf. Der Vorsprung 23 ist mit der Säule 22 über ein Drehgelenk 26, insbesondere ein Scharnier, verbunden und stellt eine Ablagefläche 24 in horizontaler Lage mit einem Touchscreen 25 bereit. Die Säule 22 und die Basis 21 bilden eine feste Einheit, wobei die Basis 21 entlang dem Verlauf der Schiene 8 breiter ausgebildet ist als die Säule 22. Ferner ist die Basis 21 mit einem nicht dargestellten aktiven Motorantrieb, beispielsweise einem sich im Fahrzeugboden 9 befindlichen Riemenantrieb, verbunden, über den die Mittelkonsole 20 von der Schiene 8 geführt verfahren werden kann.

In Figur 2b ist die Mittelkonsole 20 in einem zweiten Verwendungszustand vor dem Armaturenbrett 6 gezeigt. Der Vorsprung 23 nimmt dabei eine hochgeklappte Stellung vor dem Armaturenbrett 6 ein, wobei sich die Säule 22 und die Basis 21 an einer zweiten ans Armaturenbrett 9 rangefahrenen Position befinden. Dadurch sind zum einen die Ablagefläche 24 und der Touchscreen 25 in einer fast vertikalen Lage, in der der Touchscreen 25 vom Fahrzeuginsassen 2 bedient werden kann und zum anderen ergibt sich neben dem Sitz 3 ein Freiraum, der ein Drehen des Sitzes 3 ermöglicht.

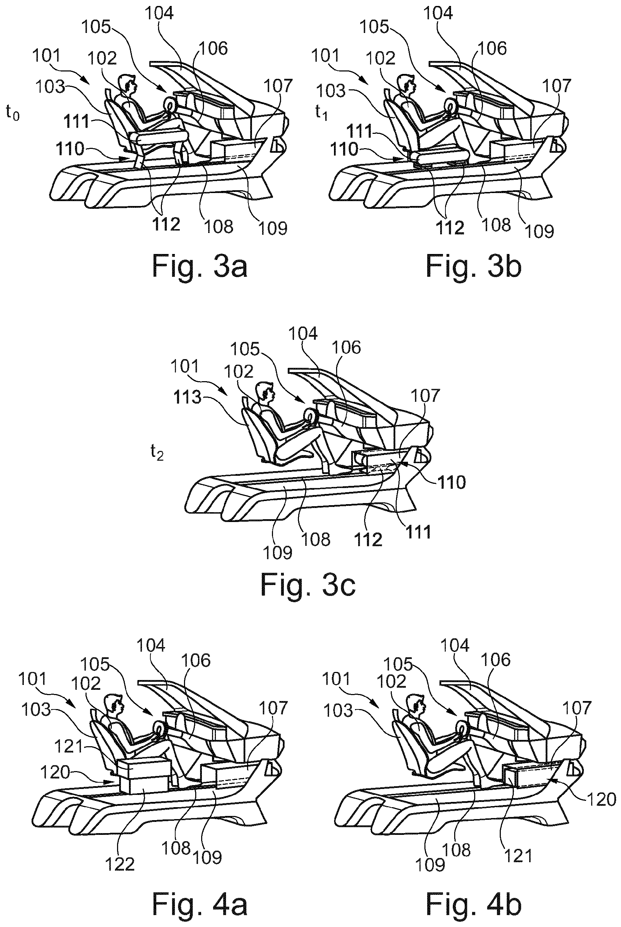

In den Figuren 3a bis 3c sowie 4a und 4b ist aus einer perspektivischen Sicht ein Fahrzeuginnenraum 101 mit einem Fahrzeuginsassen 102 auf einem Sitz 103, insbesondere einem Fahrer auf einem Fahrersitz, sowie eine Windschutzscheibe 104 und ein Fahrzeugcockpit 105 mit Lenkrad und Armaturenbrett 106 zu sehen. In einem Freiraum unterhalb des Armaturenbretts 106 befindet sich eine Garage 107, die eine Mittelkonsole 110, 120 aufnehmen kann, wobei die Mittelkonsole 110, 120 ein Staufach 111 und Kniehebel 112 aufweist. Ferner ist eine Schiene 108 im Fahrzeugboden 109 zu sehen, entlang dieser die Mittelkonsole 110, 120 verfahren werden kann.

Die Figuren 3a bis 3c zeigen einen Ablauf einer Zustandsänderung einer dritten Ausführungsform einer absenkbaren und verfahrbaren Mittelkonsole 110 aus einem Verwendungszustand in einen Verstauzustand zu drei verschiedenen Zeitpunkten t0, t1, t2. Zum Zeitpunkt t0, dargestellt in Figur 3a, ist die Mittelkonsole 110 im Verwendungszustand in einer aufgerichteten Stellung an einer ersten Position neben dem Fahrzeuginsassen 102 und dem Sitz 103. Dabei wird ein Staufach 111 der Mittelkonsole 110 von Kniehebeln 112 getragen, die sich in einem gesteckten Zustand befinden und frei sichtbar sind. Zum Zeitpunkt t1, dargestellt in Figur 3b, ist die Mittelkonsole 110 in einer abgesenkten Stellung an der ersten Position neben dem Sitz 103, wobei sich die Kniehebel 112 in einem gebeugten Zustand befinden. Dadurch ist das Staufach 111 abgesenkt und die Ausmaße der Mittelkonsole 110 nehmen ein im Vergleich zur aufgerichteten Stellung geringeres Volumen ein. Mittels eines nicht gezeigten Motorantriebs wird die Mittelkonsole 110 in der abgesenkten Stellung entlang der Schiene 108 im Fahrzeugboden 109 an eine zweite Position in die Garage 107 verfahren. Zum Zeitpunkt t2, dargestellt in Figur 3c, ist die Mittelkonsole 110 im Verstauzustand in der abgesenkten Stellung an der zweiten Position in der Garage 107, wodurch sich neben dem Sitz 103 ein Freiraum ergibt, der ein Drehen des Sitzes 103 ermöglicht.

Die Figuren 4a und 4b zeigen eine vierte Ausführungsform einer absenkbaren und verfahrbaren Mittelkonsole 120, wobei die vierte Ausführungsform zusätzlich zur dritten Ausführungsform der Mittelkonsole 110 eine Abdeckung aufweist. In Figur 4a ist die Mittelkonsole 120 im Verwendungszustand in einer aufgerichteten Stellung an einer ersten Position neben dem Fahrzeuginsassen 102 auf dem Sitz 103 zu sehen. Dabei umhüllt eine erste Abdeckung 121 das Staufach 111 und eine zweite Abdeckung 122 umhüllt die Kniehebel 112. Ferner umhüllt die erste Abdeckung 121 auch teilweise die zweite Abdeckung 122. In Figur 4b ist die Mittelkonsole 120 im Verstauzustand in einer abgesenkten Stellung an einer zweiten Position in der Garage 107 zu sehen. Die erste Abdeckung 121 umhüllt dabei vollständig die zweite Abdeckung 122. Neben dem Sitz 103 besteht, genauso wie in Figur 3c, ein Freiraum, der ein Drehen des Sitzes 103 ermöglicht.

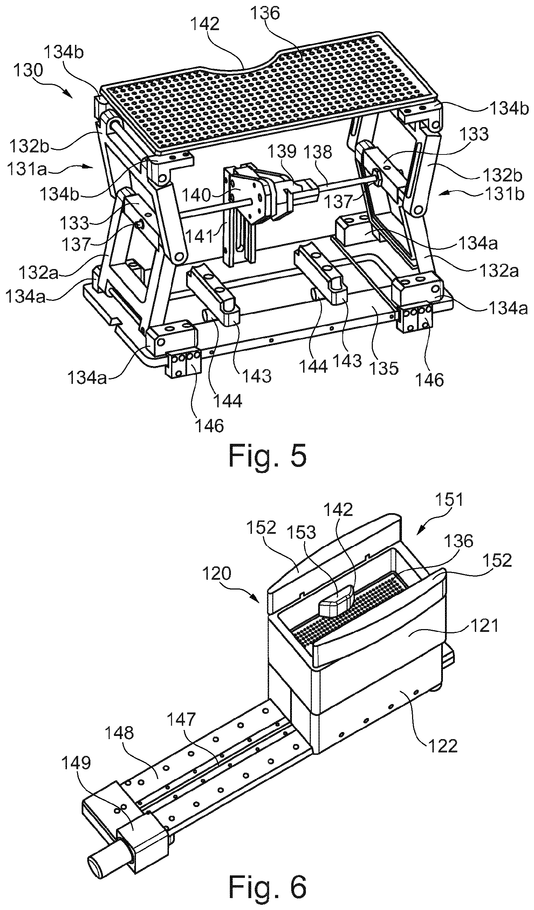

In Figur 5 ist eine Kniehebelvorrichtung 130 dargestellt, mittels welcher eine Mittelkonsole 120 abgesenkt und angehoben werden kann. Dabei stehen sich ein erster Kniehebel 131a und ein zweiter Kniehebel 131b spiegelsymmetrisch mit zugewandten Kniegelenken gegenüber. Jeder der Kniehebel 131a, 131b setzt sich aus einem ersten Hebelelement 132a und einem zweiten Hebelelement 132b zusammen. Die Hebelelemente 132a, 132b sind gabelförmig und weisen zwei Gabelbeine auf, die an einem Ende über eine Gabelbrücke verbunden geschlossen sind und am gegenüberliegenden Ende unverbunden offen sind. Das Kniegelenk eines Kniehebels 131a, 131b wird durch einen Gelenkbolzen 133 sowie die offenen Enden des ersten Hebelelements 132a und die offenen Enden des zweiten Hebelelements 132b gebildet, wobei der Gelenkbolzen 133 zwischen dem offenen Ende des ersten Hebelelements 132a eingefasst ist und das offene Ende des ersten Hebelelements 132a zusammen mit dem Gelenkbolzen 33 zwischen dem offenen Ende des zweiten Hebelelements 132b eingefasst ist und die jeweiligen nebeneinander befindlichen Gabelbeidn der Hebelelemente 132a, 132b mit dem Gelenkbolzen 133 in der Kniegelenkachse drehbar verbunden sind. Die geschlossenen Enden der ersten Hebelelemente 132a sind über erste Verbindungselemente 134a mit einer Grundplatte 135 drehbar verbunden und die geschlossenen Enden der zweiten Hebelelemente 132b sind über zweite Verbindungselemente 134b mit der Unterseite eines Staufachbodens 136 drehbar verbunden, so dass die Ebenen der Grundplatte 135 und des Staufachbodens 136 parallel zueinander stehen und die Kniehebel 131a, 131b zwischen der Grundplatte 135 und der Unterseite des Staufachbodens 136 angeordnet sind. Die jeweiligen Gelenkbolzen 133 weisen Gewindemuttern 137 auf, wobei die jeweiligen Gewinde der Gewindemuttern 137 zueinander gegenläufig sind. Die Gelenkbolzen 133 sind miteinander über eine Gewindespindel 138 verbunden, die zwei Abschnitte mit gegenläufigen Gewinden aufweist, die zu den jeweiligen Gewinden der Gewindemuttern 137 komplementär sind, so dass abhängig von der Rotationsrichtung der Gewindespindel 138 die Gelenkbolzen 133 aufeinander zu oder voneinander weg bewegt werden können. In Rotation wird die Gewindespindel 138 durch einen bei der Gewindespindel 138 angeordneten Motor 139 versetzt. Die Gewindespindel 138 sowie der Motor 139 sind über eine Halterung 140 mit einer Halterungsführung 141 verbunden, indem die Gewindespindel 138 durch ein Loch in der Halterung 140 hindurchläuft und der Motor 139 an der Halterung 140 befestigt ist. Die Halterungsführung 141 ist senkrecht auf der Grundplatte 135 angeordnet, wodurch die Halterung 140 mit der Gewindespindel 138 und dem Motor 139 absenkend und anhebend geführt wird.

Sobald der Motor 139 die Gewindespindel 138 derart in Rotation versetzt, dass die Gelenkbolzen 133 aufeinander zu bewegt werden, neigen sich die ersten Hebelelemente 132a relativ zur Grundplatte 135 aus einer aufgerichteten Stellung in eine geneigte Stellung. Dadurch wirkt auf die Gewindespindel 138 eine nach unten gerichtet Kraft, die die von der Gewindespindel 138 durchlaufene Halterung 140 an der Halterungsführung 141 entlang absenkt. Eine gegenläufige Rotation der Gewindespindel 138 führt umgekehrt dazu, dass die Gelenkbolzen 133 voneinander weg bewegt werden und sich die ersten Hebelelemente 132a aus einer relativ zur Grundplatte 135 geneigten Stellung in eine aufgerichtete Stellung aufrichten. Dadurch wirkt eine nach oben gerichtet Kraft auf die Gewindespindel 138, die die Halterung 140 an der Haltungsführung 141 entlang anhebt. Mit in Figur 5 nicht gezeigten Führungsschienen 155, die den Staufachboden 136 senkrecht zu dessen Ebene führen, werden bei einem Neigen oder Aufrichten der ersten Hebelelemente 131a die zweiten Hebelelemente 132a relativ zum Staufachboden geneigt oder aufgerichtet. Insgesamt kommt es bei einer Bewegung der Gelenkbolzen 133 aufeinander zu zu einer Beugung der Kniehebel 131a, 131b und der Staufachboden 136 senkt sich relativ zur Grundplatte 135 ab und umgekehrt kommt es bei einer Bewegung der Gelenkbolzen 133 voneinander weg zu einer Streckung der Kniehebel 131a, 131b und der Staufachboden 136 hebt sich relativ zur Grundplatte 135 an.

Der Staufachboden 136 weist eine Aussparung 142 auf, die die Halterungsführung 141 bei einem Absenken des Staufachbodens 136 durchlaufen kann. Die Grundplatte 135 weist im Platteninnenbereich eine Aussparung auf, über die mit der Oberseite der Grundplatte 135 verbundene Stege 143 angeordnet sind, an denen Riemenhalterungen 144 angebracht sind, die durch die Aussparung zur Unterseite der Grundplatte 135 ausgerichtet sind, so dass die Riemenhalterungen 144 an einen nicht gezeigten Riemen 147 unterhalb der Kniehebelvorrichtung 130 befestigt werden können. An den Seiten der Grundplatte 135 sind Führungselemente 146 für eine Bewegung entlang einer nicht gezeigten Schiene 148 angeordnet.

In Figur 6 ist die vierte Ausführungsform der Mittelkonsole 120 aus den Figuren 4a und 4b auf einer Schiene dargestellt, in der die Kniehebelvorrichtung 130 aus Figur 5 eingebaut ist. Ein Staufach 151 ist von der ersten Abdeckung 121 umhüllt und wird mit einem offenstehenden zweiteiligen Deckel 152 gezeigt. Im Staufach 151 ist der Staufachboden 136 zu sehen, wobei die Aussparung 142 des Staufachbodens 136 mit einer Aussparungsabdeckung 153 versehen ist. Bei einem Absenken der Mittelkonsole 120 nimmt die Aussparungsabdeckung 153 den Abschnitt der Halterungsführung 141 auf, der die Aussparung 142 durchläuft und vermeidet damit den Kontakt der Halterungsführung 141 mit im Staufach 151 befindlichen Gegenständen. Die zweite Abdeckung 122 umhüllt die Kniehebelvorrichtung 130 und ist teilweise von der ersten Abdeckung 121 umhüllt. Die Mittelkonsole 120 befindet sich auf einer Schiene 148, an deren Ende ein Antrieb 149 angebracht ist, der einen Riemen 147 antreibt. Der Riemen 147 bewegt sich in einer Aussparung in der Schiene 148 und kann so die an dem Riemen 147 befestigte Mittelkonsole 120 entlang der Schiene 148 verfahren.

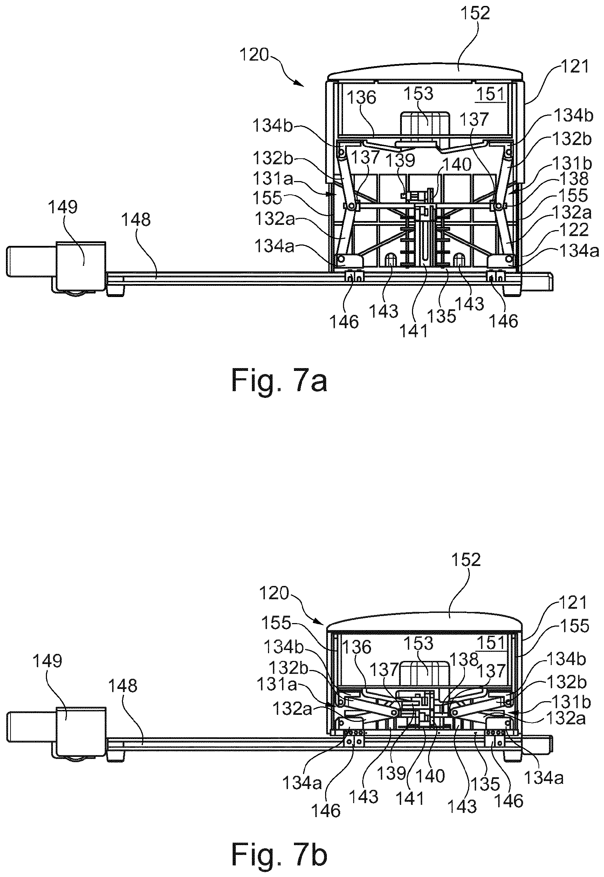

Eine Schnittansicht der in Figur 6 dargestellten vierten Ausführungsform der Mittelkonsole 120 mit Schiene 148 und Kniehebelvorrichtung 130 wird in Figur 7a in einer aufgerichteten Stellung und in Figur 7b in einer abgesenkten Stellung gezeigt. Dabei ist das Staufach 151 vom Deckel 153 verschlossen, der zusammen mit der ersten Abdeckung 121 und der zweiten Abdeckung 122 ein Gehäuse der Mittelkonsole 120 bildet. Die erste Abdeckung 121 und die zweite Abdeckung 122 weisen Führungsschienen 155 auf, mit denen beim Absenken der Mittelkonsole 120 die erste Abdeckung 121 über die zweite Abdeckung 122 geführt wird. Durch die Führungsschienen 155 und das Gehäuse wird zudem die Kniehebelvorrichtung 130 stabilisiert, indem der Staufachboden 136 mit den zweiten Verbindungselementen 134b und den damit verbundenen zweiten Hebelelementen 132b beim Absenken und Anheben der Mittelkonsole 120 entlang der Führungsschienen 155 geführt wird.

In der aufgerichteten Stellung, siehe Figur 7a, befinden sich der Motor 139 und die Halterung 140 sowie die Gewindespindel 138 am oberen Ende der Halterungsführung 141. Die Gelenkbolzen 133 befinden sich an den Enden der Gewindespindel 138, wodurch die Kniegelenke der spiegelsymmetrisch gegenüberliegenden Kniehebel 131a, 131b möglichst weit voneinander entfernt sind und die Kniehebel 131a, 131b einen gesteckten Zustand einnehmen. Im gesteckten Zustand weisen die ersten Hebelelemente 132a und die zweiten Hebelelemente 132b in der Kniebeuge zueinander einen Winkel kleiner 180° aus. Die erste Abdeckung 121 umhüllt das Staufach 151 und teilweise die zweite Abdeckung 122, die die Kniehebelvorrichtung 130 umhüllt.

In der abgesenkten Stellung, siehe Figur 7b, befinden sich der Motor 139 und die Halterung 140 sowie die Gewindespindel 138 am unteren Ende der Halterungsführung 141. Die Gelenkbolzen 133 befinden sich an der Mitte der Gewindespindel 138, wodurch die Kniegelenke der spiegelsymmetrisch gegenüberliegenden Kniehebel 131a, 131b möglichst nah beieinander sind und die Kniehebel 131a, 131b einen gebeugten Zustand einnehmen. Im gebeugten Zustand weisen die ersten Hebelelemente 132a und die zweiten Hebelelemente 132b in der Kniebeuge zueinander einen Winkel größer 0° aus. Zudem sind die erste Abdeckung 121 und die zweite Abdeckung 122 soweit ineinander verschoben, dass die erste Abdeckung 121 vollständig die zweite Abdeckung 122 umhüllt und beide Abdeckungen 121, 122 das Staufach 151 und die Kniehebelvorrichtung 130 vollständig umhüllen. Die Aussparungsabdeckung 153 nimmt den Abschnitt der Halterungsführung 141 auf, der die Aussprung 142 durchlaufen hat.

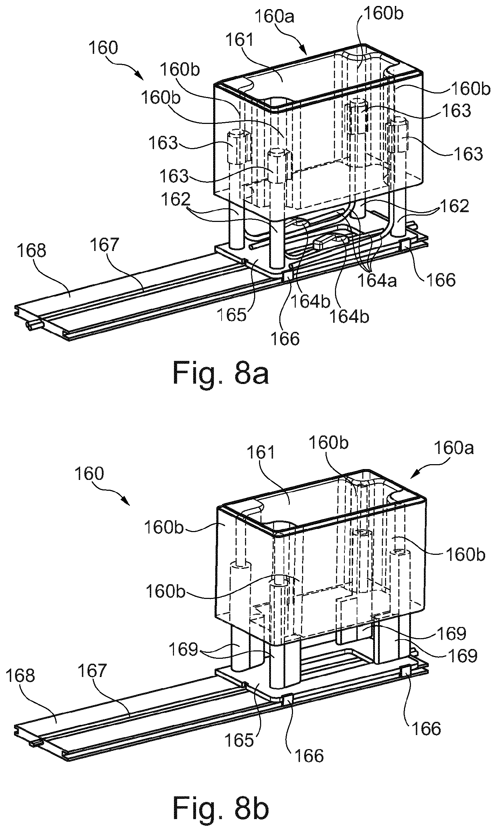

Die Figuren 8a und 8b zeigen eine fünfte und eine sechste Ausführungsform einer absenkbaren und verfahrbaren Mittelkonsole 160, die sich im Hebemechanismus voneinander unterscheiden. Die Mittelkonsole 160 weist eine quaderförmigen Box 160a auf, die oberseitig ein offenes Staufach 161 und an dessen seitlichen Ecken unterseitig offene Kanäle 160b aufweist. Ferner weist die Mittelkonsole eine Grundplatte 165 auf, die mittels Führungselementen 166 auf einer Schiene 168 geführt wird und über einen Riemen 167, der sich in einer Aussparung der Schiene 168 bewegt, entlang der Schiene 168 verfahrbar ist.

In der fünften Ausführungsform, siehe Figur 8a, sind Stangen 162 senkrecht auf der Grundplatte 165 angeordnet, die sich in die Kanäle 160b der Box 160a erstrecken. An den Stangen 162 befinden sich Schlittenelemente 163, die entlang der Stangen 162 gleiten können, wobei die Schlittenelemente 163 mittels Bowdenzügen 164a und Bowdenzugantrieben 164b bewegt werden. Die Schlittenelemente sind in den Kanälen 160b mit der Box 160a fest verbunden, so dass über die Bewegung der Schlittenelemente 163 die Box 160a und damit die Mittelkonsole 160 abgesenkt und angehoben werden kann.

In der sechsten Ausführungsform, siehe Figur 8b, sind Linearantriebe 169 senkrecht auf der Grundplatte 165 angeordnet, die sich in die Kanäle 160b der Box 160a erstrecken. Die Enden der Linearantriebe 169 sind mit der Box fest verbunden, so dass durch deren Bewegung die Box 160a und damit die Mittelkonsole 160 abgesenkt und angehoben werden kann.

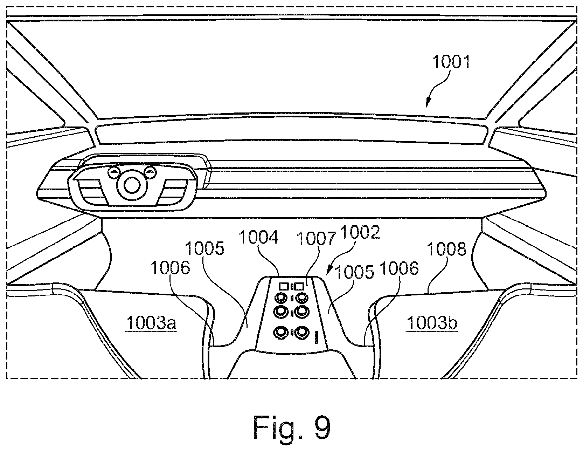

In Figur 9 ist ein vorderer Bereich eines Fahrzeuginnenraums 1001 eines erfindungsgemäßen Kraftfahrzeugs aus Sicht eines hinteren Bereichs in Fahrtrichtung mit Blick auf eine Windschutzscheibe und ein Fahrzeugcockpit mit Lenkrad zu sehen. In einer vorderen Sitzreihe, bestehend aus einem ersten Sitz 1003a als Fahrersitz links und einem zweiten Sitz 1003b als Beifahrersitz rechts, befindet sich zwischen den Sitzen 1003a, 1003b eine klapp- oder faltbare Mittelkonsole 1002 in einer aufgerichteten Stellung. Die Mittelkonsole 1002 ist symmetrisch aufgebaut und setzt sich aus einem Mittelelement 1004, zwei Seitenelementen 1005 und zwei Endelementen 1006 zusammen, die miteinander verbunden sind. Die Endelemente 1006 nehmen eine flache Lage eben mit einer Bodenoberfläche 1008 des Fahrzeuginnenraums 1001 ein und gehen in die Seitenelemente 1005 über, die eine aufgerichtete Lage einnehmen und zwischen denen das Mittelelement 1004 parallel zur Bodenoberfläche 1008 in erhöhter Lage eingespannt ist. Das Mittelelement 1004 ist mit einem Touchscreen 1007 als Bedienelement ausgestaltet, der von Fahrzeuginsassen von den Sitzen 1003a, 1003b aus bedient werden kann.

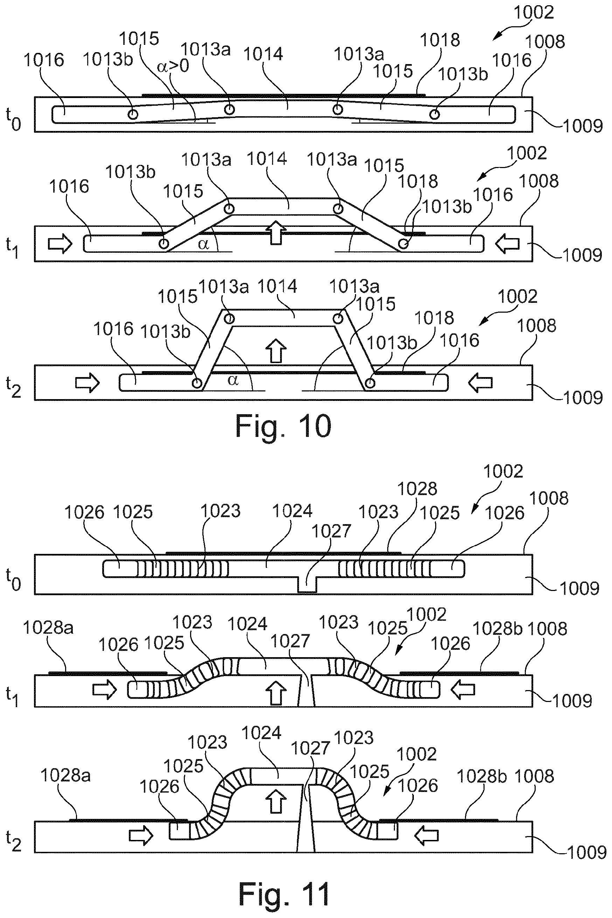

Eine siebte Ausführungsform der klappbaren oder faltbaren Mittelkonsole 1002 ist in Figur 10 zu drei verschiedenen Zeitpunkten t₀, t₁, t₂ beim Ablauf einer Stellungsänderung der Mittelkonsole 1002 dargestellt. Die Mittelkonsole 1002 ist symmetrisch aufgebaut und setzt sich aus einem Mittelelement 1014, zwei Seitenelementen 1015 und zwei Endelementen 1016 zusammen. Das Mittelelement 1014 ist an entgegengesetzten Seiten jeweils über eine erste Drehachse 1013a mit einem Seitenelement 1015 beweglich verbunden und die Seitenelemente 1015 sind jeweils an einer entgegengesetzt der Verbindung mit dem Mittelelement 1014 gelegenen Seite über eine zweite Drehachse 1013b mit einem Endelement 1016 beweglich verbunden. Bei der Stellungsänderung ändern sich der Aufstellwinkel α, der zwischen einem jeden Seitenelement 1015 und einer Ebene parallel zur Bodenoberfläche 1008 definiert ist, sowie die Höhe des Mittelelements 1014 im Bezug zur Bodenoberfläche 1008.

Zum Zeitpunkt t₀ befindet sich die Mittelkonsole 1002 in einer abgesenkten Stellung unterhalb der Bodenoberfläche 1008 in einer Aussparung eines Fahrzeugbodens 1009 und ist durch eine Abdeckplatte 1018 verdeckt. Der Aufstellwinkel α ist dabei größer Null, so dass nicht alle Elemente der Mittelkonsole 1002 flach und in derselben Ebene liegen. Die Stellungsänderung wird mittels nicht dargestellter Aktuatoren bewirkt, indem die beiden Endelemente 1016 zum Aufrichten der Mittelkonsole 1002 aufeinander zu und zum Absenken voneinander weg verschoben werden.

Vor einem Aufrichten der Mittelkonsole 1002 aus der abgesenkten Stellung, wie zum Zeitpunkt t₁ dargestellt, ist die Abdeckplatte 1018 bereits verschoben und die im Fahrzeugboden 1009 befindliche Mittelkonsole 1002 freigelegt. Bedingt durch den symmetrischen Aufbau der Mittelkonsole 1002, das zwischen den Seitenelementen 1015 eingespannte Mittelelement 1014 und einen initialen Aufstellwinkel α größer Null, richten sich beim Verschieben der Endelemente 1016 aufeinander zu die Seitenelemente 1015 auf und heben das Mittelelement 1014 an, wodurch die Mittelkonsole 1002 insgesamt aufgerichtet wird.

Zum Zeitpunkt t₂ wird durch nicht dargestellte Anschläge in den vier beweglichen Verbindungen an den Drehachsen 1013a, 1013b eine fortschreitende Stellungsänderung blockiert und damit eine maximale Aufstellhöhe der Mittelkonsole 1002 definiert sowie eine Rückmeldung an die Aktuatoren gegeben, das Verschieben der Endelemente 1016 zu stoppen. Die Endelemente 1016 verbleiben durchgehend bei allen Stellungen der Mittelkonsole 1002 innerhalb des Fahrzeugbodens 1009 in einer flachen Lage.

Eine faltbare Mittelkonsole 1002 des erfindungsgemäßen Kraftfahrzeugs ist in Figur 11 dargestellt, die analog zu Figur 10 den Ablauf einer Stellungsänderung der Mittelkonsole 1002 aus einer abgesenkten Stellung zum Zeitpunkt t₀ über eine aufrichtende Stellung zum Zeitpunkt t₁ in eine aufgerichtete Stellung zum Zeitpunkt t₂ zeigt. Die Mittelkonsole 1002 ist symmetrisch aufgebaut und setzt sich aus einem Mittelelement 1024, zwei Seitenelementen 1025 und zwei Endelementen 1026 zusammen, wobei die Seitenelemente 1025 einen Klapp- oder Faltmechanismus mit Lamellenstruktur 1023 aufweisen. Das Mittelelement 1024 ist an entgegengesetzten Seiten jeweils mit einem Seitenelement 1025 verbunden und die Seitenelemente 1025 sind jeweils an einer entgegengesetzt der Verbindung mit dem Mittelelement 1024 gelegenen Seite mit einem Endelement 1026 verbunden.

In der abgesenkten Stellung zum Zeitpunkt t₀ befindet sich die Mittelkonsole 1002 unterhalb der Bodenoberfläche 1008 in einer Aussparung des Fahrzeugbodens 1009 und ist durch eine zweiteilige Abdeckplatte 1028 verdeckt. Alle Elemente der Mittelkonsole 1002 liegen flach in derselben Ebene, wobei sich unterhalb des Mittelelements 1024 ein Hubzylinder 1027 befindet. Vor einem Aufrichten der Mittelkonsole 1002 aus der abgesenkten Stellung werden, wie zum Zeitpunkt t₁ dargestellt, ein erster Abdeckplattenteil 1028a und ein zweiter Abdeckplattenteil 1028b der zweiteiligen Abdeckplatte 1028 entgegengesetzt voneinander weg verschoben und legen die im Fahrzeugboden 1009 befindliche Mittelkonsole 1002 frei. Das Aufrichten erfolgt durch Anheben des Mittelelements 1024 von unten durch den Hubzylinder 1027, wobei sich die Lamellenstruktur 1023 der Seitenelemente 1025 der Höhe anpassend faltet, so dass die Endelemente 1026 innerhalb des Fahrzeugbodens 1009 in einer flachen Lage mitgezogen und verschoben werden. Zum Zeitpunkt t₂ ist die maximale Aufstellhöhe der Mittelkonsole 1002 erreicht, bei der die Endelemente 1026 innerhalb des Fahrzeugbodens 1009 verbleiben.

### Bezugszeichenliste

- 1: Fahrzeuginnenraum
- 2: Fahrzeuginsasse
- 3: Sitz
- 4: Windschutzscheibe
- 5: Fahrzeugcockpit
- 6: Armaturenbrett
- 7: Freiraum
- 8: Schiene
- 9: Fahrzeugboden
- 10: Mittelkonsole
- 11: Basis
- 12: Säule
- 13: Vorsprung
- 14: Ablagefläche
- 15: Touchscreen
- 16: Drehgelenk
- 20: Mittelkonsole
- 21: Basis
- 22: Säule
- 23: Vorsprung
- 24: Ablagefläche
- 25: Touchscreen
- 26: Drehgelenk

- 101: Fahrzeuginnenraum
- 102: Fahrzeuginsasse
- 103: Sitz
- 104: Windschutzscheibe
- 105: Fahrzeugcockpit
- 106: Armaturenbrett
- 107: Garage
- 108: Schiene
- 109: Fahrzeugboden
- 110: Mittelkonsole
- 111: Staufach
- 112: Kniehebel
- 120: Mittelkonsole
- 121: erste Abdeckung
- 122: zweite Abdeckung
- 130: Kniehebelvorrichtung
- 131a: erster Kniehebel
- 131b: zweiter Kniehebel
- 132a: erstes Hebelelement
- 132b: zweites Hebelelement
- 133: Gelenkbolzen
- 134a: erstes Verbindungselement
- 134b: zweites Verbindungselement
- 135: Grundplatte
- 136: Staufachboden
- 137: Gewindemutter
- 138: Gewindespindel
- 139: Motor
- 140: Halterung
- 141: Halterungsführung
- 142: Aussparung
- 143: Steg
- 144: Riemenhalterung
- 146: Führungselement
- 147: Riemen
- 148: Schiene
- 149: Antrieb
- 151: Staufach
- 152: Deckel
- 153: Aussparungsabdeckung
- 155: Führungsschiene
- 160: Mittelkonsole
- 160a: Box
- 160b: Kanal
- 161: Staufach
- 162: Stab
- 163: Schlittenelement
- 164a: Bowdenzug
- 164b: Bowdenzugantrieb
- 165: Grundplatte
- 166: Führungselement
- 167: Riemen
- 168: Schiene
- 169: Linearaktuator

- 1001: Fahrzeuginnenraum
- 1002: Mittelkonsole
- 1003a: erster Sitz
- 1003b: zweiter Sitz
- 1004: Mittelelement
- 1005: Seitenelement
- 1006: Endelement
- 1007: Touchscreen
- 1008: Bodenoberfläche
- 1009: Fahrzeugboden
- 1013a: erste Drehachse
- 1013b: zweite Drehachse
- 1014: Mittelelement
- 1015: Seitenelement
- 1016: Endelement
- 1018: Abdeckplatte
- 1023: Lamellenstruktur
- 1024: Mittelelement
- 1025: Seitenelement
- 1026: Endelement
- 1027: Hubzylinder
- 1028: Abdeckplatte
- 1028a: erster Abdeckplattenteil
- 1028b: zweiter Abdeckplattenteil

- α: Aufstellwinkel

## Patentansprüche

1. Kraftfahrzeug mit einer neben einem verdrehbaren Sitz (1003a, 1003b) beweglich angeordneten Mittelkonsole (1002), wobei die Mittelkonsole (1002) mit mindestens einer Ablagefläche, einem Deckel, einem Monitor, einem Bedienfeld und/oder einem Touchscreen (1007) zwischen zwei Sitzen (1003a, 1003b) in einem Kraftfahrzeug bereitgestellt ist,
wobei die Mittelkonsole (1002) aus einem ersten Verwendungszustand an einer ersten Position in einen zweiten Verwendungszustand an einer zweiten Position bewegbar ist, wobei sich die Lage der Ablagefläche, des Deckels, des Monitors, des Bedienfelds und/oder des Touchscreens (1007) zwischen dem ersten Verwendungszustand und dem zweiten Verwendungszustand ändert und die Mittelkonsole (1002) im zweiten Verwendungszustand zwischen den Sitzen (1003a, 1003b) einen Freiraum lässt, und wobei die Ablagefläche, der Deckel, der Monitor, das Bedienfeld und/oder das Touchscreen (1007) beim Bewegen der Mittelkonsole (1002) aus einer ersten, im Wesentlichen horizontalen Lage im ersten Verwendungszustand in eine zweite zusammengefaltete im Wesentliche horizontale Lage im zweiten Verwendungszustand bewegbar ist,
wobei die Mittelkonsole (1002) über einen Faltmechanismus, von der ersten, aufrechten Position, die den ersten Verwendungszustand bestimmt, in die zweite zusammengefaltete Position, die den zweiten Verwendungszustand bestimmt, bewegbar ist,
wobei die Mittelkonsole (1002) in der zweiten Position relativ zu der Bodenoberfläche (1008) zwischen den Sitzen (1003a, 1003b) abgesenkt ist, **dadurch gekennzeichnet, dass** der Faltmechanismus fünf Elemente (1024-1026) aufweist, umfassend
• ein Mittelelement (1024), das in der ersten, aufrechten Position im Wesentlichen parallel zu der Bodenoberfläche (1008) verläuft,
• zwei Endelemente (1026), die in der ersten, aufrechten Position im Wesentlichen parallel zu der Bodenoberfläche (1008) verlaufen und in die Bodenoberfläche (1008) zumindest teilweise abgesenkt sind, und
• zwei Seitenelemente (1025) zwischen den Endelementen (1026) und dem Mittelelement (1024),
wobei die Elemente (1024-1026) einen Faltmechanismus mit Lammelenstruktur (1023) aufweisen, und mindestens einen Hubzylinder (1027) zum Absenken und Aufrichten zwecks Wechsel zwischen der ersten und zweiten Position der Mittelkonsole (1002).

2. Kraftfahrzeug nach Anspruch 1, **dadurch gekennzeichnet, dass** die Mittelkonsole (1002) im zweiten Verwendungszustand zwischen den Sitzen (1003a, 1003b) einen Freiraum lässt, so dass zumindest einer der Sitze (1003a, 1003b) um zumindest 45°, vorzugsweise zumindest 90°, um seine Längsachse senkrecht zum Fahrzeugboden (1009) an der Mittelkonsole (1002) vorbei bewegbar ist.

3. Kraftfahrzeug nach Anspruch 1 oder 2, **dadurch gekennzeichnet, dass** die Mittelkonsole (1002) einen symmetrischen Aufbau relativ zu ihrer Längsachse senkrecht zu der Bodenoberfläche (1008) und senkrecht zur Fahrzeuglängsachse hat.

4. Kraftfahrzeug nach einem der vorangehenden Ansprüche, **gekennzeichnet durch** mindestens ein Anschlagselement zur Definition der ersten, aufrechten Position und/oder einer maximale Aufstellhöhe der Mittelkonsole (1002), wobei vorzugsweise der Faltmechanismus, insbesondere eines der fünf Elemente (1004-1006; 1014-1016, 1024-1026) desselben, das Anschlagselement umfasst oder mit demselben, insbesondere beweglich, verbunden ist.

5. Kraftfahrzeug nach einem der vorangehenden Ansprüche, **gekennzeichnet durch** ein selbsthemmendes System, insbesondere umfassend ein untersetztes Getriebe, so dass eine auf die Mittelkonsole (1002) ausgeübte externe Kraft kein Absenken oder Aufrichten der Mittelkonsole (1002) bewirkt.

## Claims

1. A motor vehicle having a center console (1002) movably arranged next to a rotatable seat (1003a, 1003b), wherein the center console (1002) is provided with at least a storage surface, a lid, a monitor, a control panel and/or a touch screen (1007), between two seats (1003a, 1003b) in a motor vehicle,
wherein the center console (1002) is movable from a first use state at a first position to a second use state at a second position,
wherein the position of the storage surface, the lid, the monitor, the control panel and/or the touch screen (1007) changes between the first use state and the second use state and the center console (1002) leaves an open space between the seats (1003a, 1003b) in the second use state, and
wherein the storage surface, the lid, the monitor, the control panel and/or the touch screen (1007) is/are movable from a first, substantially horizontal position in the first use state to a second folded, substantially horizontal position in the second use state when the center console (1002) is moved,
wherein
the center console (1002) is movable by means of a folding mechanism from the first, upright position, which determines the first use state, to the second, folded position, which determines the second use state,
wherein, in the second position, the center console (1002) is lowered relative to the floor surface (1008) between the seats (1003a, 1003b),
**characterized in that**
the folding mechanism has five elements (1024-1026), comprising
• a center element (1024) which runs substantially parallel to the floor surface (1008) in the first, upright position,
• two end elements (1026) which run substantially parallel to the floor surface (1008) in the first, upright position and which are at least partially lowered into the floor surface (1008), and
• two side elements (1025) between the end elements (1026) and the center element (1024),
wherein the elements (1024-1026) have a folding mechanism with a lamellar structure (1023), and
at least one lifting cylinder (1027) for lowering and raising for the purpose of changing between the first and second positions of the center console (1002).

2. The motor vehicle according to Claim 1, **characterized in that** in the second use state, the center console (1002) leaves an open space between the seats (1003a, 1003b) such that at least one of the seats (1003a, 1003b) is movable past the center console (1002) by at least 45°, preferably at least 90°, around its longitudinal axis perpendicular to the vehicle floor (1009).

3. The motor vehicle according to Claim 1 or 2, **characterized in that** the center console (1002) has a symmetrical structure relative to its longitudinal axis perpendicular to the floor surface (1008) and perpendicular to the vehicle's longitudinal axis.

4. The motor vehicle according to any one of the preceding claims, **characterized by** at least one stopper element for defining the first, upright position and/or a maximum height of the center console (1002) in said upright position, wherein
preferably the folding mechanism, in particular one of the five elements (1004-1006, 1014-1016, 1024-1026) thereof, comprises the stopper element or is connected to the same, in particular movably.

5. The motor vehicle according to any one of the preceding claims, **characterized by** a self-locking system, in particular comprising a reduction gear, such that an external force acting on the center console (1002) does not cause lowering or raising of the center console (1002).

## Revendications

1. Véhicule automobile avec une console centrale (1002) disposée de manière mobile à côté d'un siège rotatif (1003a, 1003b), dans lequel la console centrale (1002) est équipée d'au moins une surface de rangement, un couvercle, un moniteur, un panneau de commande et/ou un écran tactile (1007) entre deux sièges (1003a, 1003b) dans un véhicule automobile, dans lequel la console centrale (1002) est mobile depuis un premier état d'utilisation au niveau d'une première position jusque dans un second état d'utilisation au niveau d'une seconde position, dans lequel la situation de la surface de rangement, du couvercle, du moniteur, du panneau de commande et/ou de l'écran tactile (1007) change entre le premier état d'utilisation et le second état d'utilisation et la console centrale (1002) laisse un espace libre entre les sièges (1003a, 1003b) dans le second état d'utilisation, et dans lequel la surface de rangement, le couvercle, le moniteur, le panneau de commande et/ou l'écran tactile (1007) sont mobiles lors du déplacement de la console centrale (1002) depuis une première situation sensiblement horizontale dans le premier état d'utilisation jusque dans une seconde situation repliée sensiblement horizontale dans le second état d'utilisation,
dans lequel
la console centrale (1002) est déplacée via un mécanisme de pliage de la première position verticale, qui définit le premier état d'utilisation, jusque dans la seconde position repliée qui définit le second état d'utilisation,
dans lequel la console centrale (1002) est abaissée dans la seconde position par rapport à la surface de plancher (1008) entre les sièges (1003a, 1003b),
**caractérisé en ce que**
le mécanisme de pliage présente cinq éléments (1024-1026), comprenant
• un élément central (1024) qui, dans la première position verticale, s'étend sensiblement parallèlement à la surface de plancher (1008),
• deux éléments d'extrémité (1026) qui, dans la première position verticale, s'étendent sensiblement parallèlement à la surface de plancher (1008) et sont au moins partiellement abaissés dans la surface de plancher (1008), et
• deux éléments latéraux (1025) entre les éléments d'extrémité (1026) et l'élément central (1024),
dans lequel les éléments (1024-1026) présentent un mécanisme de pliage avec une structure lamellaire (1023), et
au moins un vérin de levage (1027) destiné à l'abaissement et au relèvement en vue du changement entre la première et la seconde position de la console centrale (1002).

2. Véhicule automobile selon la revendication 1, **caractérisé en ce que**
la console centrale (1002) laisse un espace libre entre les sièges (1003a, 1003b) dans le second état d'utilisation de telle sorte qu'au moins un des sièges (1003a, 1003b) soit mobile d'au moins 45°, de préférence d'au moins 90°, autour de son axe longitudinal perpendiculairement au plancher de véhicule (1009) au-delà de la console centrale (1002).

3. Véhicule automobile selon la revendication 1 ou 2, **caractérisé en ce que**
la console centrale (1002) a une construction symétrique par rapport à son axe longitudinal perpendiculairement à la surface de plancher (1008) et perpendiculairement à l'axe longitudinal de véhicule.

4. Véhicule automobile selon l'une quelconque des revendications précédentes, **caractérisé par**
au moins un élément de butée pour définir la première position verticale et/ou une hauteur de montage maximale de la console centrale (1002), dans lequel de préférence le mécanisme de pliage, en particulier un des cinq éléments (1004-1006 ; 1014-1016, 1024-1026) de celui-ci, comprend l'élément de butée ou est relié à celui-ci, en particulier de manière mobile.

5. Véhicule automobile selon l'une quelconque des revendications précédentes, **caractérisé par**
un système autobloquant, en particulier comprenant un démultiplicateur de vitesse de telle sorte qu'une force externe exercée sur la console centrale (1002) ne provoque pas l'abaissement ou le relèvement de la console centrale (1002).
